Europäisches Patentamt

European Patent Office

Office européen des brevets

(19)

(11) EP 1 675 066 A1

(12) EUROPEAN PATENT APPLICATION
published in accordance with Art. 158(3) EPC

(43) Date of publication:
28.06.2006 Bulletin 2006/26

(51) Int Cl.:
*G06T 7/00* (1995.01)

(21) Application number: 04792481.6

(22) Date of filing: 15.10.2004

(86) International application number:
PCT/JP2004/015264

(87) International publication number:
WO 2005/038715 (28.04.2005 Gazette 2005/17)

(84) Designated Contracting States:
DE FR GB

(30) Priority: 15.10.2003 JP 2003354793

(71) Applicant: SEIKO EPSON CORPORATION
Shinjuku-ku,
Tokyo 163-0811 (JP)

(72) Inventors:
• NAGAHASHI, Toshinori,
Seiko Epson Corporation
Suwa-shi,
Nagano 392-8502 (JP)

• HYUGA, Takashi,
Seiko Epson Corporation
Suwa-shi,
Nagano 392-8502 (JP)

(74) Representative: Hoffmann, Eckart
Patentanwalt,
Bahnhofstrasse 103
82166 Gräfelfing (DE)

(54) **FACE IMAGE CANDIDATE AREA SEARCH METHOD, FACE IMAGE CANDIDATE AREA SEARCH SYSTEM, AND FACE IMAGE CANDIDATE AREA SEARCH PROGRAM**

(57) A sample image is filtered through a circumferential filter 28, an image feature amount is learned in a discrimination section 30, an image G tobe searched is filtered through the circumferential filter 28 to detect a rotation invariant image feature amount for each filtered area, and each detected image feature amount is inputted into the discrimination section 30. Thereby, it is discriminated whether or not a filtering area is considered to be face image at high speed. And the dimensional number of image feature amounts is greatly reduced, so that not only the discrimination work but also the learning time of the sample image are greatly reduced.

*FIG. 1*

EP 1 675 066 A1

**Description**

Technical Field

The present invention relates to a pattern recognition or object recognition technology, and more particularly to a face image candidate area searching method, system and program for searching an area considered to be face image having a high possibility where a person' s face image exists from an image at high speed.

[Background Art]

Along with the higher performance of the pattern recognition technology or information processing apparatus such as a computer in recent years, the recognition precision of characters or voices has been remarkably improved. However, it is well known that it is still an extremely difficult work to make the pattern recognition for an image having a figure, object or scenery reflected, for example, an image picked up by a digital camera, or particularly to discriminate whether or not a person's face is reflected in the image correctly and at high speed.

However, it is a very important theme to discriminate automatically and correctly whether or not a person's face is reflected in the image, or who the person is, using the computer, in making the establishment of a living body recognition technology, improved security, speedy criminal investigation, and faster arranging or searching operation of image data, and many proposals regarding this theme have been ever made.

For example, in JP 9-50528A, for a certain input image, the presence or absence of a flesh color area is firstly determined, the flesh color area is made mosaic by automatically deciding its mosaic size, the distance between the mosaic area and a person's face dictionary is calculated to determine the presence or absence of a person's face, and the person's face is segmented, whereby false extraction due to influence of the background is reduced, and the person's face is automatically found from the image efficiently.

However, with the above prior art, a rotated (inclined) face image is not judged as the face image, but treated as another pattern, resulting in a problem that it takes a long time to extract this face image.

That is, when the inclined (rotated) face image is detected, it is required that assuming the angle of rotation, the degree of coincidence with the person's face dictionary is calculated for every assumed angle of rotation (e.g., every 10˚), or for every fixed angle of rotating the image, but there is a problem that an enormous computation time is needed.

Thus, this invention has been achieved to solve the above-mentioned problems, and it is an obj ect of the invention is to provide a new face image candidate area searching method, system and program for searching an area considered to be face image having a high possibility where the person' s face image exists from the image at high speed.

DISCLOSURE OF THE INVENTION

In order to achieve the above object, the invention 1 provides a face image candidate area searching method for searching an area considered to be face image having a high possibility where a face image exists from an image to be searched for which it is unknown whether or not any face image is contained, the method comprising filtering each of a plurality of sample images for learning through a predetermined circumferential filter to detect each rotation invariant image feature amount, and learn each image feature amount in a discrimination section, sequentially filtering the image to be searched through the circumferential filter to detect a rotation invariant image feature amount for each filtered area, sequentially inputting each detected image feature amount into the discrimination section, and sequentially discriminating whether or not a filtering area corresponding to the image feature amount inputted using the discrimination section is considered to be face image.

That is, in this invention, when the discrimination section conventionally learns for the discrimination of face image, the image feature amounts of the plurality of sample images for learning are not directly inputted and learned, but the image feature amounts are filtered through the predetermined circumferential filter and then learned.

In discriminating whether or not a predetermined area in the image to be searched is considered to be face image, employing the discrimination section after learning the rotation invariant image feature amounts of the sample images in this way, the image feature amount of that area is not directly inputted, but filtered through the circumferential filter employed at the time of learning to calculate the rotation invariant image feature amount after filtering and input the calculated image feature amount.

Thereby, it is possible to discriminate whether or not the filtering area is considered to be face image at high speed, irrespective of the rotation (inclination) of face existing in the image to be searched. Also, since the dimensional number of the image feature amount is greatly reduced by employing the rotation invariant image feature amount after filtering through the circumferential filter, not only the computational time in the discrimination work but also the learning time of the sample image can be greatly reduced.

Also, the invention 2 provides the face image candidate area searching method according to the invention 1, wherein the discrimination section employs a support vector machine or a neural network.

That is, the support vector machine (hereinafter abbreviated as "SVM"), which was proposed in a framework of statistical learning theory by V. Vapnik, AT&T in 1995, means a learning machine capable of acquiring a hyper-plane optimal for linearly separating all the input data, employing an index of margin, and is known as one of the superior learning models in the ability of pattern recognition, as will be described later in detail. In case that linear separation is impossible, high discrimination capability is exhibited, employing a kernel-trick technique.

On the other hand, the neural network is a computer model simulating a neural circuit network of organism's brain. Particularly, a PDP (Parallel Distributed Processing) model that is a neural network of multi-layer type allows for the pattern learning for linearly inseparable pattern and is a typical classification method in the pattern recognition technique.

Accordingly, if such a high precision discriminator is specifically employed as the discrimination section, false discrimination is greatly reduced to achieve the high precision discrimination.

Also, the invention 3 provides a face image candidate area searching method for searching an area considered to be face image having a high possibility where a face image exists from an image to be searched for which it is unknown whether or not any face image is contained, the method comprising filtering each of a plurality of sample images for learning through a predetermined circumferential filter to detect a rotation invariant image feature amount, and calculate an average face vector of the sample images from each image feature amount, sequentially filtering the image to be searched through the circumferential filter to detect a rotation invariant image feature amount for each filtered area and calculate an image vector for each area from the image feature amount, calculating the vector distance between each calculated image vector and the average face vector, and sequentially discriminating whether or not an area corresponding to the image vector is considered to be face image depending on the calculated distance.

That is, though in the invention 1 it is discriminated whether or not the filtering area is considered to be face image, employing the discrimination section that is the discriminator of SVM, in this invention the vector distance between the average face vector obtained from the sample face image and the image vector obtained from the filtering area is calculated, and it is discriminated whether or not the area corresponding to the image vector is considered to be face image depending on the calculated distance.

Thereby, it is possible to discriminate whether or not the filtering area is considered to be face image at high precision, without employing the specific discrimination section composed of the discriminator of SVM.

Also, the invention 4 provides the face image candidate area searching method according to any one of claims 1 to 3, wherein the rotation invariant image feature amount is any one of the intensity of edge, the variance of edge, or the brightness in each pixel, or a sum of the values of linearly integrating the average value of their combinations along the circumference of each circle for the circumferential filter for the number of circles.

Thereby, the plurality of sample face images for learning, the rotation invariant image feature amount in each filtering area, and the average face vector of the sample face images and the image vector of each filtering area from the image feature amount can be securely detected.

Also, the invention 5 provides the face image candidate area searching method according to the invention 4, wherein the intensity of edge or the variance of edge in the each pixel is calculated using a Sobel operator.

That is, this Sobel operator is one of the differential type edge detection operators for detecting a portion where density is abruptly changed, such as the edge or line in the image, and known as the optimal operator for detecting the contour of person's face in particular, as compared with other differential type edge detection operators such as Roberts and Prewitt.

Accordingly, the image feature amount is appropriately detected by calculating the intensity of edge or the variance of edge in each pixel, employing the Sobel operator.

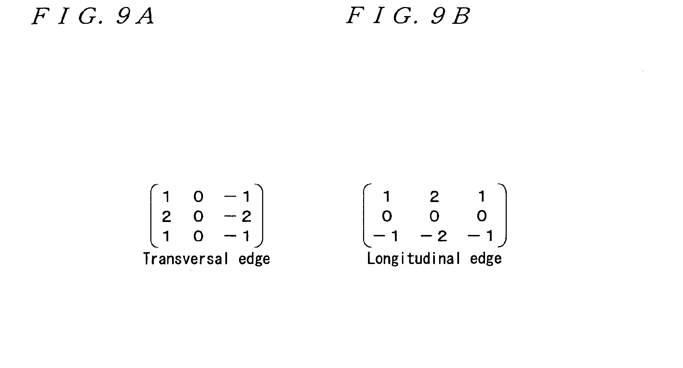

The configuration of this Sobel operator is shown in FIGS. 9A and 9B (a: transversal edge) and (b: longitudinal edge). The intensity of edge is calculated as the square root of a sum of adding the squared calculation result based on each operator.

Also, the invention 6 provides a face image candidate area searching system for searching an area considered to be face image having a high possibility where a face image exists from an image to be searched for which it is unknown whether or not any face image is contained, the system comprising an image reading section for reading a predetermined area within the image to be searched and a sample image for learning, a feature amount calculation section for filtering the predetermined area within the image to be searched and the sample image for learning that are read by the image reading section through the same circumferential filters to calculate each rotation invariant image feature amount, and a discrimination section for learning the rotation invariant image feature amount for the sample image for learning that is calculated by the feature amount calculation section and discriminating whether or not the predetermined area within the image to be searched calculated by the feature amount calculation section is considered to be face image from the learned results.

Thereby, it is possible to discriminate whether or not the filtering area is considered to be face image at high speed and automatically without regard to the rotation of face residing in the image to be searched in the same way as in the invention 1, and the dimension of the image feature amount is greatly reduced, whereby not only the discrimination work but also the learning time of the sample image can be greatly shortened.

Also, the invention 7 provides the face image candidate area searching system according to the invention 6, wherein the discrimination section is a support vector machine or a neural network discriminator.

Thereby, the false discrimination for the filtering area is greatly reduced and the high precision discrimination is performed in the same way as in the invention 2.

Also, the invention 8 provides a face image candidate area searching system for searching an area considered to be face image having a high possibility where a face image exists from an image to be searched for which it is unknown whether or not any face image is contained, the system comprising an image reading section for reading a predetermined area within the image to be searched and a sample image for learning, a feature amount calculation section for filtering the predetermined area within the image to be searched and the sample image for learning that are read by the image reading section through the same circumferential filters to calculate each rotation invariant image feature amount, and a discrimination section for calculating an average face vector of the sample image for learning and an image vector of the predetermined area within the image to be searched from the rotation invariant image feature amounts calculated by the feature amount calculation section, and discriminating whether or not the predetermined area within the image to be searched is considered to be face image depending on the distance between both the calculated vectors by calculating the distance.

Thereby, it is possible to discriminate whether or not the filtering area is considered to be face image without employing the specific discrimination section composed of the discriminator of SVM in the same way as in the invention 3.

Also, the invention 9 provides a face image candidate area searching program for searching an area considered to be face image having a high possibility where a face image exists from an image to be searched for which it is unknown whether or not any face image is contained, the program enabling a computer to perform an image reading step of reading a predetermined area within the image to be searched and a sample image for learning, a feature amount calculation step of filtering the predetermined area within the image to be searched and the sample image for learning that are read at the image reading step through the same circumferential filters to calculate each rotation invariant image feature amount, and a discrimination step of learning the rotation invariant image feature amount for the sample image for learning that is calculated at the feature amount calculation step and discriminating whether the predetermined area within the image to be searched calculated at the feature amount calculation step is considered to be face image from the learned results.

Thereby, there is the same effect as in the invention 1, and the functions are implemented on the software, employing a general-purpose computer such as a personal computer, more economically and easily than employing the specific hardware. Also, the functions are easily improved only by rewriting a part of the program.

Also, the invention 10 provides a face image candidate area searching program for searching an area considered to be face image having a high possibility where a face image exists from an image to be searched for which it is unknown whether or not any face image is contained, the program enabling a computer to perform an image reading step of reading a predetermined area within the image to be searched and a sample image for learning, a feature amount calculation step of filtering the predetermined area within the image to be searched and the sample image for learning that are read by the image reading section through the same circumferential filters to calculate each rotation invariant image feature amount, and a discrimination step of calculating an average face vector of the sample image for learning and an image vector of the predetermined area within the image to be searched from the rotation invariant image feature amounts calculated by the feature amount calculation section, and discriminating whether or not the predetermined area within the image to be searched is considered to be face image depending on the distance between both the calculated vectors by calculating the distance.

Thereby, there is the same effect as in the invention 3, and the functions are implemented on the software, employing a general-purpose computer such as a personal computer, and produced more economically and easily than employing the specific hardware. Also, the functions are easily improved only by rewriting a part of the program.

BRIEF DESCRIPTION OF THE DRAWINGS

FIG. 1 is a block diagram showing a system for searching area considered to be face image according to one embodiment of the present invention;
FIG. 2 is a flowchart showing a method for searching area considered to be face image according to one embodiment of the invention;
FIG. 3 is a view showing an example of an image to be searched;
FIG. 4 is a conceptual view showing a state where a partial area of the image to be searched is filtered through a circumferential filter;

FIG. 5 is a conceptual view showing a state where a partial area of the image to be searched is filtered through the circumferential filter;

FIGS. 6A to 6C are explanatory views showing an arrangement of pixels of notice composing the circumferential filter;

FIGS. 7A to 7C are explanatory views showing an arrangement of pixels of notice composing the circumferential filter;

FIGS. 8A to 8C are explanatory views showing an arrangement of pixels of notice composing the circumferential filter; and

FIGS. 9A and 9B are diagrams showing the configuration of a Sobel operator.

BEST MODE FOR CARRYING OUT THE EMBODIMENT

The best mode for carrying out the present invention will be described below with reference to the accompanying drawings.

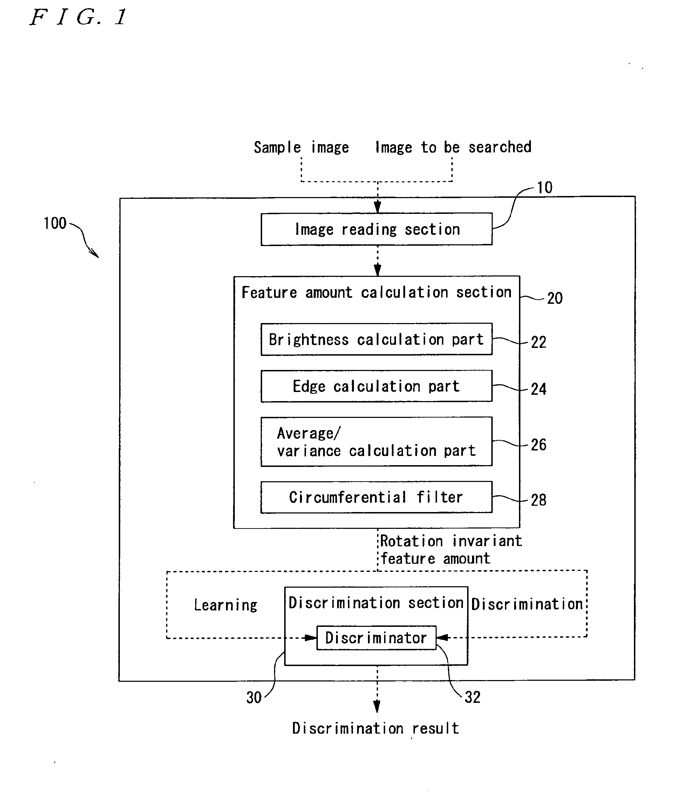

FIG. 1 is a block diagram showing a system 100 for searching area considered to be face image according to one embodiment of the present invention.

As illustrated in FIG. 1, the system 100 for searching area considered to be face image is mainly composed of an image reading section 10 for reading a sample image for learning and an image to be searched, a feature amount calculation section 20 for calculating the rotation invariant image feature amount for the image read by the image reading section 10, and a discrimination section 30 for discriminating whether or not the image to be searched is the area considered to be face image from the rotation invariant image feature amount calculated by the feature amount calculation section 20.

Specifically, the image reading section 10 is a CCD (Charge Coupled Device) camera such as a digital still camera or a digital video camera, a vidicon camera, an image scanner or a drum scanner, and provides a function of making the A/D conversion for a predetermined area of the image to be searched and a plurality of face images and non-face images as the sample images for learning, which are read in, and sequentially sending the digital data to the feature amount calculation section 20.

The feature amount calculation section 20 further comprises a brightness calculation part 22 for calculating the brightness in the image, an edge calculation part 24 for calculating the intensity of edge in the image, an average/variance calculation part 26 for calculating the average of the intensity of edge, the average of brightness, or the variance of the intensity of edge, and a circumferential filter 28 having a plurality of concentric circles, and provides a function of calculating the rotation invariant image feature amount for each of the sample images and the image to be searched by making the line integration of pixel values sampled discretely by the average/variance calculation part 26 along the circumference of the circumferential filter 28 and summing the integral values by the number of circumference for each circle, and sequentially sending the calculated image feature amount to the discrimination section 30.

Specifically, the discrimination section 30 comprises a discriminator 32 consisting of a support vector machine (SVM), and provides a function of learning the rotation invariant image feature amount for each of a plurality of face images and non-face images as the samples for learning calculated by the feature amount calculation section 20, and discriminating whether or not a predetermined area of the image to be searched calculated by the feature amount calculation section 20 is the area considered to be face image from the learned result.

This support vector machine means a learning machine that can acquire a hyper-plane optimal for linearly separating all the input data, employing an index of margin, as previously described. It is well known that the support vector machine can exhibit a high discrimination capability, employing a technique of kernel trick, even in case that the linear separation is not possible.

And the SVM as used in this embodiment is divided into two steps: 1. learning step, and 2. discrimination step.

Firstly, at 1. learning step, after the image reading section 10 reads a number of face images and non-face images that are sample images for learning, the feature amount calculation section 20 calculates the feature amount of each image filtered through the circumferential filter 28, in which the feature amount is learned as a feature vector, as shown in FIG. 1.

Thereafter, 2. discrimination step involves sequentially reading a predetermined area of the image to be searched and filtering the area through the circumferential filter 28, calculating the rotation invariant image feature amount after filtering, inputting the feature amount as the feature vector, and discriminating whether or not the area contains the face image at high possibility, depending on which area the input feature vector corresponds to on the discrimination hyper-plane.

Herein, the size of the face image and non-face image as the sample for learning is identical to the size of the circumferential filter 28. For example, when the circumferential filter 28 is 19x19 pixels, the size of face image and non-face image is also 19x19 pixels, and the area of the same size is employed in detecting the face image.

Moreover, this SVM will be described below in more detail with reference to "Pattern Recognition and Statistics of Learning", written by Hideki Aso, Kouji Tsuda and NoboruMurata, Iwanami Shoten, pp. 107 to 118. When a discrimination problem is non-linear, the SVM can employ a non-linear kernel function, in which the discrimination function is given by the following formula 1.

That is, when the value of formula 1 is equal to "0", the discrimination function is a discrimination hyper-plane, or otherwise, the distance from the discrimination hyper-plane calculated from the given image feature amount. Also, the discrimination function represents the face image when the result of formula 1 is non-negative, or the non-face image when it is negative.

[Formula 1]

$$f((\Phi(x)) = \sum_{i=1}^{n} \alpha i * yi * K(x, xi) + b$$

Where x and xi are the image feature amounts. K is a kernel function, which is given by the following formula 2 in this embodiment.

[Formula 2]

$$K(x, xi) = (a * x * xi + b)^T$$

$$where\ a=1,\ b=0,\ T=2$$

The control for the feature amount calculation section 20, the discrimination section 30 and the image reading section 10 is practically implemented on a computer system of personal computer or the like, comprising a hardware system in which a CPU, RAM (main storage), ROM (secondary storage), and various interfaces are connected via a bus, and a specific computer program (software) stored in various storage media such as aharddiskdrive (HDD), a semiconductor ROM, CD-ROM or DVD-ROM.

One example of the method for searching area considered to be face image according to the invention will be described below.

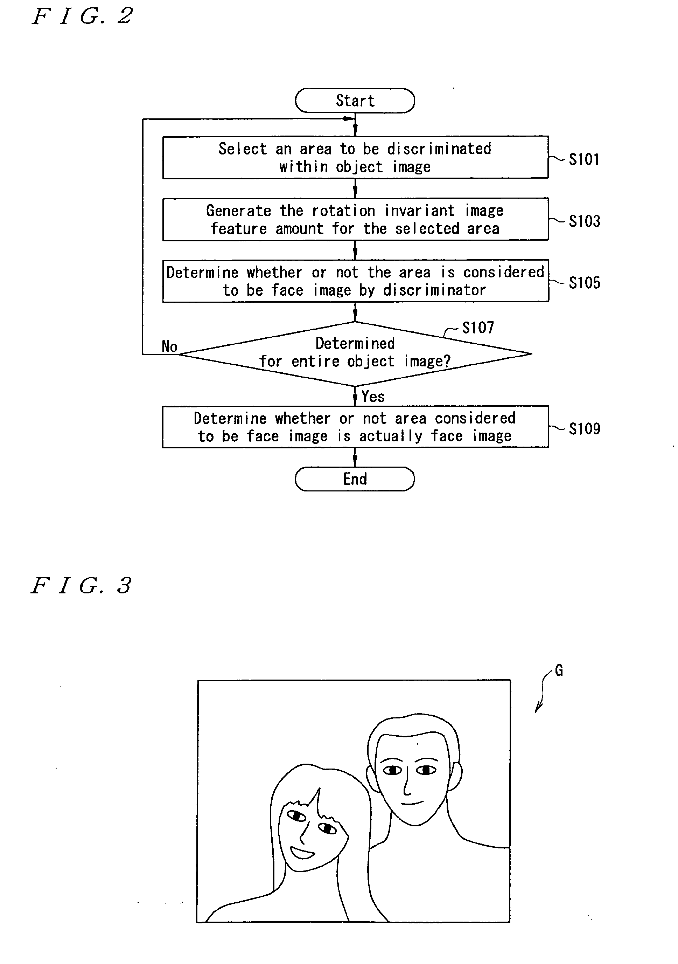

FIG. 2 is a flowchart actually showing one example of the method for searching area considered to be face image for the image to be searched. In making the actual discrimination, it is required to perform in advance a step of learning the face images and non-face images that are sample images for learning in the discriminator 32 composed of the SVM used for the discrimination.

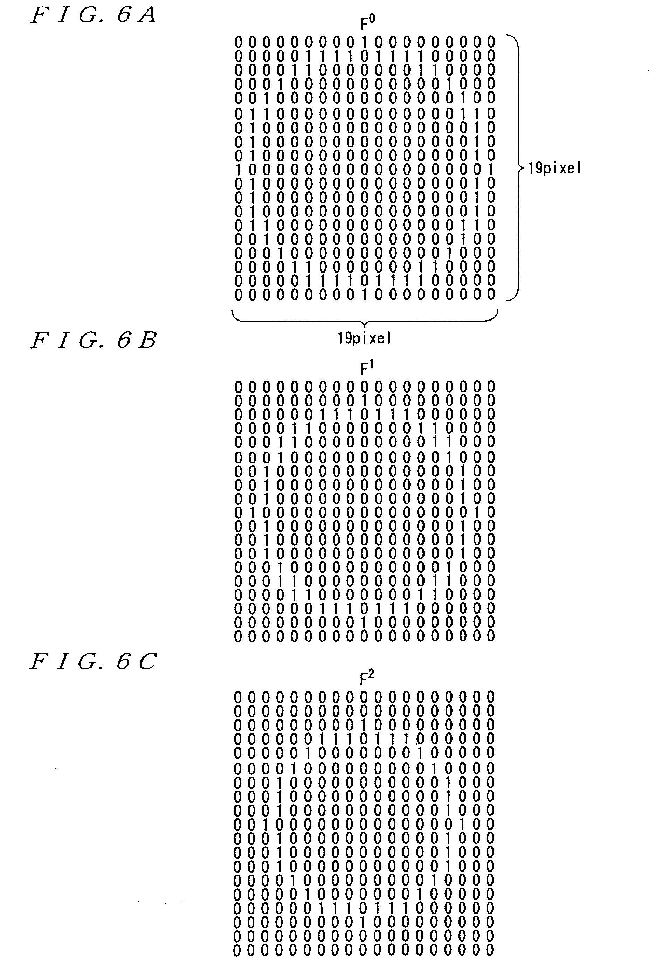

This learning step conventionally involves calculating the feature amount for each of face images and non-face images that are sample images, and inputting the feature amount together with the information as to whether the image is face image or non-face image, in which the input image feature amount is the rotation invariant image feature amount after filtering through a nine dimensional circumferential filter composed of nine concentric circles, as shown in FIGS. 6A to 6C, 7A to 7C, and 8A to 8C.

As shown in FIGS. 6A to 6C, 7A to 7C, and 8A to 8C, this circumferential filter 28 is an example in which the filter size is 19x19, namely, the normalized image size is 19x19 pixels, in which the nine dimensional rotation invariant image feature amount for each image is obtained by making the line integration of the pixel corresponding to sign "1" in each figure along its circumference, and summing its integral value for each circle.

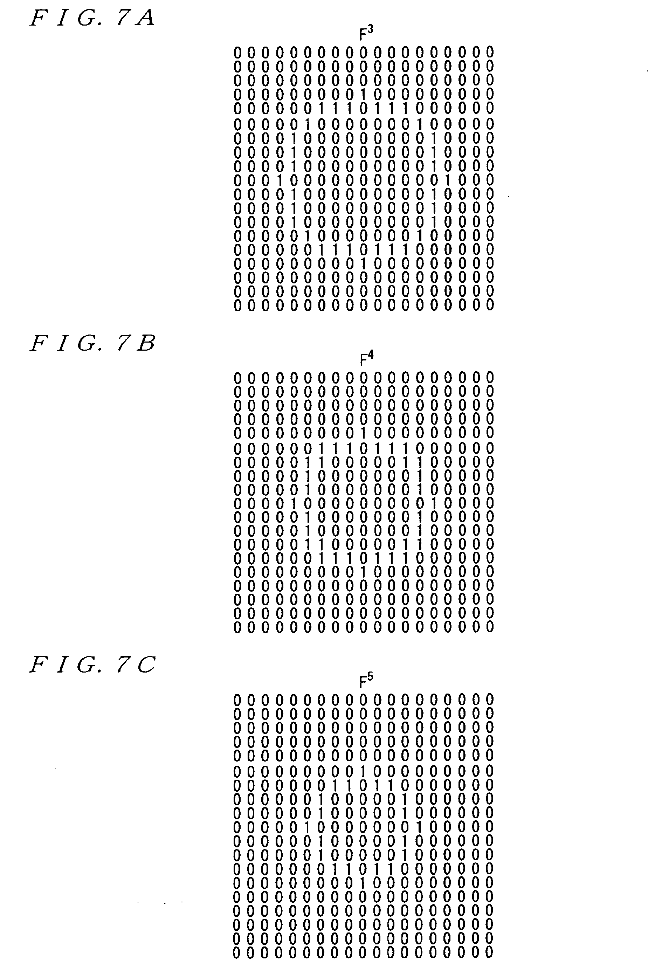

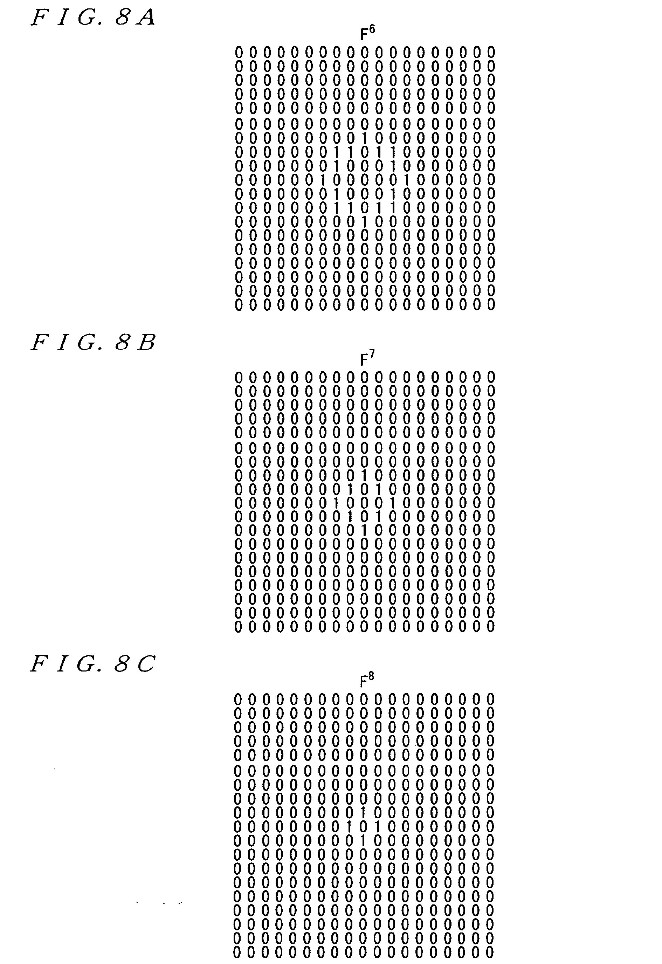

That is, filter F0 of FIG. 6A has the largest circle composed of sign "1" indicating the pixel subject to line integration, filter F1 of FIG. 6B has a circle smaller by one pixel longitudinally and transversally than the circle of filter F0, and filter F2 of FIG. 6C has a circle smaller by one pixel longitudinally and transversally than the circle of filter F1. Also, filters F3 to F5 of FIGS. 7A to 7C indicate smaller circles by one pixel longitudinally and transversally, and filters F6 to F8 of FIGS. 8A to 8C indicate smaller circles by one pixel longitudinally and transversally, in which the circle of filter F8 is the smallest. That is, the circumferential filter 28 of this embodiment has a filter size of 19x19 pixels, in which the nine circles that are larger by one pixel from the center of the pixel are formed on the concentric circle.

When the image for learning to be learned in advance is larger than 19x19, the image is made mosaic in a block of 19x19 by the average/variance calculation part 28 of the feature amount calculation section 20, whereby the nine dimensional rotation invariant image feature amount is obtained through the filter 28.

And the learning described above is performed, employing the circumferential filter 28 composed of nine concentric circles, and the rotation invariant image feature amount used for discrimination is calculated, employing the following computational expression of formula 3.

[Formula 3]

$$V_k = \sum_{x,y=0}^{x=w-1,\ y=h-1} F^k (x, y) * P (x, y)$$

Where w is the number of pixels in the transverse direction, and h is the number of pixels in the longitudinal direction, x and y are pixel positions in the transverse and longitudinal directions,
$F^k$ is the circumferential filter, and
P is image feature amount obtained by the previous method.

Then, if the rotation invariant image feature amount is learned for the discriminator 32 in this way, a discrimination area within the image G to be searched is selected at step S101 in FIG. 2.

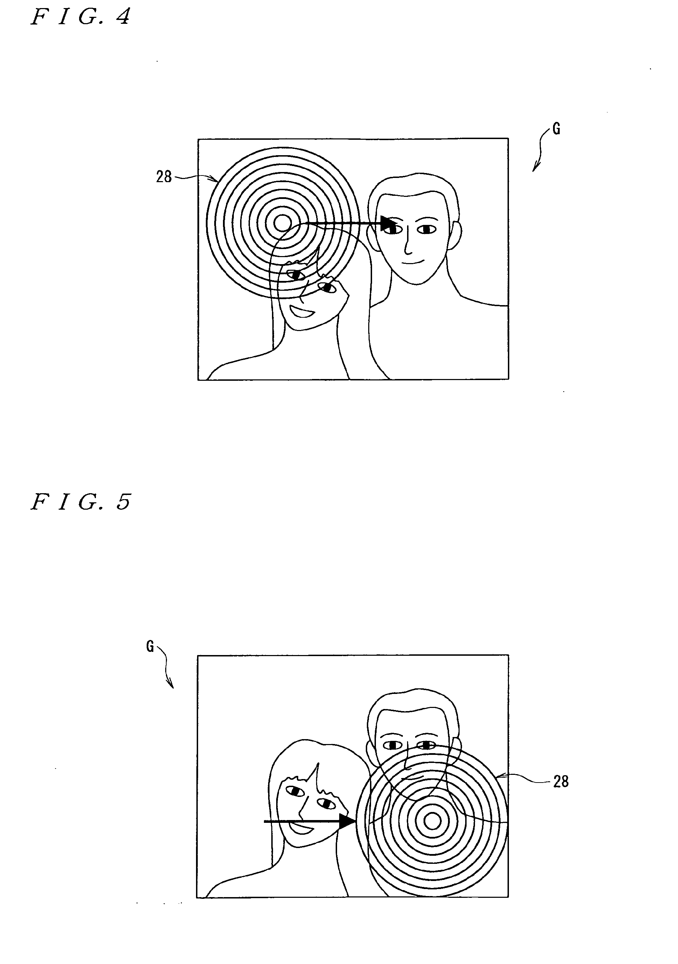

Herein, the image G to be searched is a photo of a young couple of man and woman, in which the face of man is vertical and looks to the front, while the face of woman is obliquely inclined (rotated), and the size of the circumferential filter 28 for use is about one-fourth of the image G to be searched, as shown in FIGS. 3 and 4, for example.

In this case, the image to be searched that is firstly selected is a left upper area in which the image G to be searched is divided longitudinally and transversally from the center into four. As shown in FIG. 4, the image of this area is passed through the circumferential filter 28 to generate the rotation invariant image feature amount for that area (step S103).

In this way, if the rotation invariant image feature amount for the area to be searched is obtained, the operation transfers to the next step S105, where the rotation invariant image feature amount is inputted into the SVM of the discriminator 32 and it is determined whether or not the area is considered to be face image in the SVM. The determination result is separately stored in the storage means, not shown.

Then, if determination for the left upper area of the image G to be searched is ended in this way, it is discriminated whether or not determination for all the areas in the image G to be searched is ended at the next step S107. If not ended (No), the operation returns to the first step S101 again to select the next area and repeat the same steps.

In an example of FIG. 4, since the left upper area of the image G to be searched is only determined, No is naturally selected at step S107, and the operation transfers to step S101. Thereby, an area moved a certain distance to the right in the figure from the first area, for example, moved to the right by five pixels from the first area is selected as the next determination area, and the same determination is performed successively. Thereafter, if the circumferential filter 28 reaches the right end area in the image G to be searched, the circumferential filter 28 is moved directly downward by five pixels, for example, and then moved to the left in the image G to be searched in succession this time, whereby the determination for each area is made.

In this way, the determination is made while the circumferential filter 28 is moved successively to the next area within the image G to be searched, and the circumferential filter 28 reaches the rightmost lower area within the image G to be searched, as shown in FIG. 5. Then, if it is judged that the determination for all the areas is ended (Yes), the operation transfers to step S109, where it is determined whether or not the area considered to be face image at step S105 is actually the face image. Then, the procedure is ended. In the examples of FIGS. 3 to 5, when the circumferential filter 28 reaches the area of face image not only for man but also for woman, two areas of face image for man and woman are detected as the area considered to be face image. The determination at step S109 is automatically made for the person's face by applying a technique for determining the presence or absence of the person's face by making mosaic the flesh area and computing the distance between the mosaic area and the person's face dictionary, as in prior art or JP 9-50528A.

Thus, in this invention, the image for learning and the image to be searched are passed through the circumferential filter to acquire the rotation invariant image feature amount, and it is determined whether or not the area is considered to be face image based on this rotation invariant image feature amount, whereby the time required for learning as well as the time required for searching can be greatly reduced, and the area considered to be face image is searched at high speed.

That is, though in the above example, it is required to compute the image feature amounts of 361 (19x19) dimensions directly corresponding to the 19x19 pixels, in this invention the number of dimensions required for computation is nine, so that the computation time is greatly reduced accordingly. Also, one discrimination operation for each area is required as a rule, whereby it is securely discriminated whether the area is considered to be face image for not only the vertical face of man but also the inclined face of woman, as shown in FIGS. 3 to 5.

Though in this embodiment, the discriminator 32 of the SVM is employed as the discrimination section 30 for discriminating whether or not the filtering area is the area considered to be face image, it is possible to discriminate whether or not the area is considered to be face image without using the discriminator 32.

That is, the average face vector is generated from the sample face image for learning, employing the formula 3, and the image vector is generated from the filtering area, employing the same formula 3. Thereby the distance between these two vectors is calculated, inwhich if the vector distance is less than or equal to a predetermined threshold acquired beforehand from the face image and non-face image, it is determined that the area is considered to be face image, or if the vector distance is more than the threshold, it is determined that the area is not considered to be face image.

That is, the value of the following formula 4 is smaller than the threshold, the area is considered to be face image.

$$[\text{Formula } 4]$$

$$\sum_k (V_k - \overline{V}_k)^2 \ / \ |\ V\ | \ / \ |\ \overline{V}\ |$$

Where $|V|$, $|\overline{V}|$ is the size of each vector.

Thereby, as in the previous embodiment, the area considered to be face image is searched at high speed, and actually extracted at relatively high probability by this method.

**Claims**

1. A face image candidate area searching method for searching an area considered to be face image having a high possibility where a face image exists from an image to be searched for which it is unknown whether or not any face image is contained, said method comprising:

    filtering each of a plurality of sample images for learning through a predetermined circumferential filter to detect each rotation invariant image feature amount, and learn said each image feature amount in a discrimination section;
    sequentially filtering said image to be searched through the circumferential filter to detect a rotation invariant image feature amount for each filtered area;
    sequentially inputting each detected image feature amount into said discrimination section; and
    sequentially discriminating whether or not a filtering area corresponding to the image feature amount inputted using said discrimination section is considered to be face image.

2. The face image candidate area searching method according to claim 1, wherein said discrimination section employs a support vector machine or a neural network.

3. A face image candidate area searching method for searching an area considered to be face image having a high possibility where a face image exists from an image to be searched for which it is unknown whether or not any face image is contained, said method comprising:

    filtering each of a plurality of sample images for learning through a predetermined circumferential filter to detect a rotation invariant image feature amount, and calculate an average face vector of said sample images from each image feature amount;
    sequentially filtering said image to be searched through said circumferential filter to detect a rotation invariant image feature amount for each filtered area and calculate an image vector for each area from said image feature amount;
    calculating the vector distance between each calculated image vector and said average face vector; and
    sequentially discriminating whether or not an area corresponding to said image vector is considered to be face image depending on said calculated distance.

4. The face image candidate area searching method according to any one of claims 1 to 3, wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

5. The face image candidate area searching method according to claim 4, wherein the intensity of edge or the variance of edge in said each pixel is calculated using a Sobel operator.

6. A face image candidate area searching system for searching an area considered to be face image having a high possibility where a face image exists from an image to be searched for which it is unknown whether or not any face image is contained, said system comprising:

an image reading section for reading a predetermined area within said image to be searched and a sample image for learning;

a feature amount calculation section for filtering the predetermined area within said image to be searched and said sample image for learning that are read by said image reading section through the same circumferential filters to calculate each rotation invariant image feature amount; and

a discrimination section for learning said rotation invariant image feature amount for said sample image for learning that is calculatedby said feature amount calculation section and discriminating whether or not said predetermined area within said image to be searched calculatedby said feature amount calculation section is considered to be face image from the learned results.

7. The face image candidate area searching system according to claim 6, wherein said discrimination section is a support vector machine or a neural network discriminator.

8. A face image candidate area searching system for searching an area considered to be face image having a high possibility where a face image exists from an image to be searched for which it is unknown whether or not any face image is contained, said system comprising:

an image reading section for reading a predetermined area within said image to be searched and a sample image for learning;

a feature amount calculation section for filtering the predetermined area within said image to be searched and said sample image for learning that are read by said image reading section through the same circumferential filters to calculate each rotation invariant image feature amount; and

a discrimination section for calculating an average face vector of said sample image for learning and an image vector of the predetermined area within said image to be searched from said rotation invariant image feature amounts calculated by said feature amount calculation section, and discriminating whether or not said predetermined area within said image to be searched is considered to be face image depending on the distance between both said calculated vectors by calculating the distance.

9. A face image candidate area searching program for searching an area considered to be face image having a high possibility where a face image exists from an image to be searched for which it is unknown whether or not any face image is contained, said program enabling a computer to perform:

an image reading step of reading a predetermined area within said image to be searched and a sample image for learning;

a feature amount calculation step of filtering the predetermined area within said image to be searched and said sample image for learning that are read at said image reading step through the same circumferential filters to calculate each rotation invariant image feature amount; and

a discrimination step of learning said rotation invariant image feature amount for said sample image for learning that is calculated at said feature amount calculation step and discriminating whether or not said predetermined area within said image to be searched calculated at said feature amount calculation step is considered to be face image from the learned results.

10. A face image candidate area searching program for searching an area considered to be face image having a high possibility where a face image exists from an image to be searched for which it is unknown whether or not any face image is contained, said program enabling a computer to perform:

an image reading step of reading a predetermined area within said image to be searched and a sample image for learning;

a feature amount calculation step of filtering the predetermined area within said image to be searched and said sample image for learning that are read by said image reading section through the same circumferential filters to calculate each rotation invariant image feature amount; and

a discrimination step of calculating an average face vector of said sample image for learning and an image vector of the predetermined area within said image to be searched from said rotation invariant image feature amounts calculated by said feature amount calculation section, and discriminating whether or not said predetermined area within said image to be searched is considered to be face image depending on the distance between both said calculated vectors by calculating the distance.

**Amended claims under Art. 19.1 PCT**

**1.** A face image candidate area searching method for searching an area considered to be face image having a high possibility where a face image exists from an image to be searched for which it is unknown whether or not any face image is contained, said method comprising:

filtering each of a plurality of sample images for learning through a predetermined circumferential filter to detect each rotation invariant image feature amount, and learn said each image feature amount in a discrimination section;
sequentially filtering said image to be searched through the circumferential filter to detect a rotation invariant image feature amount for each filtered area;
sequentially inputting each detected image feature amount into said discrimination section; and
sequentially discriminating whether or not a filtering area corresponding to the image feature amount inputted using said discrimination section is considered to be face image;
wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

**2.** A face image candidate area searching method for searching an area considered to be face image having a high possibility where a face image exists from an image to be searched for which it is unknown whether or not any face image is contained, said method comprising:

filtering each of a plurality of sample images for learning through a predetermined circumferential filter to detect a rotation invariant image feature amount, and calculate an average face vector of said sample images from each image feature amount;
sequentially filtering said image to be searched through said circumferential filter to detect a rotation invariant image feature amount for each filtered area and calculate an image vector for each area from said image feature amount;
calculating the vector distance between each calculated image vector and said average face vector; and
sequentially discriminating whether or not an area corresponding to said image vector is considered to be face image depending on said calculated distance;
wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

**3.** A face image candidate area searching system for searching an area considered to be face image having a high possibility where a face image exists from an image to be searched for which it is unknown whether or not any face image is contained, said system comprising:

an image reading section for reading a predetermined area within said image to be searched and a sample image for learning;
a feature amount calculation section for filtering the predetermined area within said image to be searched and said sample image for learning that are read by said image reading section through the same circumferential filters to calculate each rotation invariant image feature amount; and
a discrimination section for learning said rotation invariant image feature amount for said sample image for learning that is calculated by said feature amount calculation section and discriminating whether or not said predetermined area within said image to be searched calculated by said feature amount calculation section is considered to be face image from the learned results;
wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

**4.** A face image candidate area searching system for searching an area considered to be face image having a high possibility where a face image exists from an image to be searched for which it is unknown whether or not any face image is contained, said system comprising:

an image reading section for reading a predetermined area within said image to be searched and a sample image for learning;

a feature amount calculation section for filtering the predetermined area within said image to be searched and said sample image for learning that are read by said image reading section through the same circumferential filters to calculate each rotation invariant image feature amount; and

a discrimination section for calculating an average face vector of said sample image for learning and an image vector of the predetermined area within said image to be searched from said rotation invariant image feature amounts calculated by said feature amount calculation section, and discriminating whether or not said predetermined area within said image to be searched is considered to be face image depending on the distance between both said calculated vectors by calculating the distance;

wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

**5.** A face image candidate area searching program for searching an area considered to be face image having a high possibility where a face image exists from an image to be searched for which it is unknown whether or not any face image is contained, said program enabling a computer to perform:

an image reading step of reading a predetermined area within said image to be searched and a sample image for learning;

a feature amount calculation step of filtering the predetermined area within said image to be searched and said sample image for learning that are read at said image reading step through the same circumferential filters to calculate each rotation invariant image feature amount; and

a discrimination step of learning said rotation invariant image feature amount for said sample image for learning that is calculated at said feature amount calculation step and discriminating whether or not said predetermined area within said image to be searched calculated at said feature amount calculation step is considered to be face image from the learned results;

wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

**6.** A face image candidate area searching program for searching an area considered to be face image having a high possibility where a face image exists from an image to be searched for which it is unknown whether or not any face image is contained, said program enabling a computer to perform:

an image reading step of reading a predetermined area within said image to be searched and a sample image for learning;

a feature amount calculation step of filtering the predetermined area within said image to be searched and said sample image for learning that are read by said image reading section through the same circumferential filters to calculate each rotation invariant image feature amount; and

a discrimination step of calculating an average face vector of said sample image for learning and an image vector of the predetermined area within said image to be searched from said rotation invariant image feature amounts calculated by said feature amount calculation section, and discriminating whether or not said predetermined area within said image to be searched is considered to be face image depending on the distance between both said calculated vectors by calculating the distance;

wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

**Amended claims under Art. 19.1 PCT**

**1.** (Amended) A face image candidate area searching method for searching an area considered to be face image having a high possibility where a face image exists from an image to be searched for which it is unknown whether or not any face image is contained, said method comprising:

filtering each of a plurality of sample images for learning through a predetermined circumferential filter to detect each rotation invariant image feature amount, and learn said each image feature amount in a discrimination section;

sequentially filtering said image to be searched through the circumferential filter to detect a rotation invariant image feature amount for each filtered area;

sequentially inputting each detected image feature amount into said discrimination section; and

sequentially discriminating whether or not a filtering area corresponding to the image feature amount inputted using said discrimination section is considered to be face image;

wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

**2.** (Cancelled)

**3.** (Amended) A face image candidate area searching method for searching an area considered to be face image having a high possibility where a face image exists from an image to be searched for which it is unknown whether or not any face image is contained, said method comprising:

filtering each of a plurality of sample images for learning through a predetermined circumferential filter to detect a rotation invariant image feature amount, and calculate an average face vector of said sample images from each image feature amount;

sequentially filtering said image to be searched through said circumferential filter to detect a rotation invariant image feature amount for each filtered area and calculate an image vector for each area from said image feature amount;

calculating the vector distance between each calculated image vector and said average face vector; and

sequentially discriminating whether or not an area corresponding to said image vector is considered to be face image depending on said calculated distance;

wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

**4.** (Cancelled)

**5.** (Cancelled)

**6.** (Amended) A face image candidate area searching system for searching an area considered to be face image having a high possibility where a face image exists from an image to be searched for which it is unknown whether or not any face image is contained, said system comprising:

an image reading section for reading a predetermined area within said image to be searched and a sample image for learning;

a feature amount calculation section for filtering the predetermined area within said image to be searched and said sample image for learning that are read by said image reading section through the same circumferential filters to calculate each rotation invariant image feature amount; and

a discrimination section for learning said rotation invariant image feature amount for said sample image for learning that is calculatedby said feature amount calculation section and discriminating whether or not said predetermined area within said image to be searched calculated by said feature amount calculation section is considered to be face image from the learned results;

wherein said rotation invariant image feature amount is any one of the intensity of edge, the variance of edge, or the brightness in each pixel, or a sum of the values of linearlyintegrating the average value of their combinations along the circumference of each circle for said circumferential filter for the number of circles.

**7.** (Cancelled)

**8.** (Amended) A face image candidate area searching system for searching an area considered to be face image having a high possibility where a face image exists from an image to be searched for which it is unknown whether or not any face image is contained, said system comprising:

an image reading section for reading a predetermined area within said image to be searched and a sample image for learning;

a feature amount calculation section for filtering the predetermined area within said image to be searched and said sample image for learning that are read by said image reading section through the same circumferential filters to calculate each rotation invariant image feature amount; and

a discrimination section for calculating an average face vector of said sample image for learning and an image vector of the predetermined area within said image to be searched from said rotation invariant image feature amounts calculated by said feature amount calculation section, and discriminating whether or not said predetermined area within said image to be searched is considered to be face image depending on the distance between both said calculated vectors by calculating the distance;

wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

9. (Amended) A face image candidate area searching program for searching an area considered to be face image having a high possibility where a face image exists from an image to be searched for which it is unknown whether or not any face image is contained, said program enabling a computer to perform:

an image reading step of reading a predetermined area within said image to be searched and a sample image for learning;

a feature amount calculation step of filtering the predetermined area within said image to be searched and said sample image for learning that are read at said image reading step through the same circumferential filters to calculate each rotation invariant image feature amount; and

a discrimination step of learning said rotation invariant image feature amount for said sample image for learning that is calculated at said feature amount calculation step and discriminating whether or not said predetermined area within said image to be searched calculated at said feature amount calculation step is considered to be face image from the learned results;

wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

10. (Amended) A face image candidate area searching program for searching an area considered to be face image having a high possibility where a face image exists from an image to be searched for which it is unknown whether or not any face image is contained, said program enabling a computer to perform:

an image reading step of reading a predetermined area within said image to be searched and a sample image for learning;

a feature amount calculation step of filtering the predetermined area within said image to be searched and said sample image for learning that are read by said image reading section through the same circumferential filters to calculate each rotation invariant image feature amount; and

a discrimination step of calculating an average face vector of said sample image for learning and an image vector of the predetermined area within said image to be searched from said rotation invariant image feature amounts calculated by said feature amount calculation section, and discriminating whether or not said predetermined area within said image to be searched is considered to be face image depending on the distance between both said calculated vectors by calculating the distance;

wherein said rotation invariant image feature amount is any one of the intensity of edge, the variance of edge, or the brightness in each pixel, or a sum of the values of linearly integrating the average value of their combinations along the circumference of each circle for said circumferential filter for the number of circles.

**Statement under Art. 19.1 PCT**

Original claims 2,4,5 and 7 are cancelled because in view of the results of the International Search Report, it is considered difficult to obtain an affirmative opinion as to the novelty and inventive step of the contents of these claims.

**1.** Employment of support vector machine, neural net and Sobel operator is publicly known and, thus, deleted from the scope of the claims.

**2.** In the cited references, image feature amount is calculated based on Zernike moment, but in the present application, brightness and sum of line integral values of edges are used and, thus, it is more resistant to illumination change than the methods according to the cited references. Further, high-speed search is enabled.

*F I G. 1*

Sample image    Image to be searched

Image reading section — 10

Feature amount calculation section — 20

Brightness calculation part — 22

Edge calculation part — 24

Average/
variance calculation part — 26

Circumferential filter — 28

Rotation invariant
feature amount

Learning    Discrimination section    Discrimination

Discriminator

100

30    32

Discrimination result

*F I G. 2*

```
                    ┌─────────────────┐
                    │      Start      │
                    └─────────────────┘
                             │
   ┌─────────────────────────▼─────────────────────────┐
   │     Select an area to be discriminated            │──── S101
   │            within object image                    │
   └─────────────────────────┬─────────────────────────┘
                             │
   ┌─────────────────────────▼─────────────────────────┐
   │     Generate the rotation invariant image         │──── S103
   │       feature amount for the selected area        │
   └─────────────────────────┬─────────────────────────┘
                             │
   ┌─────────────────────────▼─────────────────────────┐
   │  Determine whether or not the area is considered  │──── S105
   │        to be face image by discriminator          │
   └─────────────────────────┬─────────────────────────┘
                             │              ─ S107
         No         ◇ Determined            ◇
   ──────────────── for entire object image? ────────
                             │ Yes
   ┌─────────────────────────▼─────────────────────────┐
   │   Determine whether or not area considered        │──── S109
   │    to be face image is actually face image        │
   └─────────────────────────┬─────────────────────────┘
                             │
                    ┌────────▼────────┐
                    │       End       │
                    └─────────────────┘
```

*F I G. 3*

*F I G. 4*

*F I G. 5*

*F I G.  6 A*

$F^0$

```
0 0 0 0 0 0 0 0 0 1 0 0 0 0 0 0 0 0 0
0 0 0 0 0 1 1 1 1 0 1 1 1 1 0 0 0 0 0
0 0 0 0 1 1 0 0 0 0 0 0 1 1 0 0 0 0 0
0 0 0 1 0 0 0 0 0 0 0 0 0 1 0 0 0 0 0
0 0 1 0 0 0 0 0 0 0 0 0 0 0 1 0 0 0 0
0 1 1 0 0 0 0 0 0 0 0 0 0 0 1 1 0 0 0
0 1 0 0 0 0 0 0 0 0 0 0 0 0 0 1 0 0 0
0 1 0 0 0 0 0 0 0 0 0 0 0 0 0 1 0 0 0
0 1 0 0 0 0 0 0 0 0 0 0 0 0 0 1 0 0 0
1 0 0 0 0 0 0 0 0 0 0 0 0 0 0 0 1 0 0
0 1 0 0 0 0 0 0 0 0 0 0 0 0 0 1 0 0 0
0 1 0 0 0 0 0 0 0 0 0 0 0 0 0 1 0 0 0
0 1 0 0 0 0 0 0 0 0 0 0 0 0 0 1 0 0 0
0 1 1 0 0 0 0 0 0 0 0 0 0 0 1 1 0 0 0
0 0 1 0 0 0 0 0 0 0 0 0 0 0 1 0 0 0 0
0 0 0 1 0 0 0 0 0 0 0 0 0 1 0 0 0 0 0
0 0 0 0 1 1 0 0 0 0 0 0 1 1 0 0 0 0 0
0 0 0 0 0 1 1 1 1 0 1 1 1 1 0 0 0 0 0
0 0 0 0 0 0 0 0 0 1 0 0 0 0 0 0 0 0 0
```

19pixel (height) × 19pixel (width)

*F I G.  6 B*

$F^1$

```
0 0 0 0 0 0 0 0 0 0 0 0 0 0 0 0 0 0 0
0 0 0 0 0 0 0 0 1 0 0 0 0 0 0 0 0 0 0
0 0 0 0 0 1 1 1 0 1 1 1 0 0 0 0 0 0 0
0 0 0 0 1 1 0 0 0 0 0 0 1 1 0 0 0 0 0
0 0 0 1 1 0 0 0 0 0 0 0 0 1 1 0 0 0 0
0 0 0 1 0 0 0 0 0 0 0 0 0 0 1 0 0 0 0
0 0 1 0 0 0 0 0 0 0 0 0 0 0 0 1 0 0 0
0 0 1 0 0 0 0 0 0 0 0 0 0 0 0 1 0 0 0
0 0 1 0 0 0 0 0 0 0 0 0 0 0 0 1 0 0 0
0 1 0 0 0 0 0 0 0 0 0 0 0 0 0 0 1 0 0
0 0 1 0 0 0 0 0 0 0 0 0 0 0 0 1 0 0 0
0 0 1 0 0 0 0 0 0 0 0 0 0 0 0 1 0 0 0
0 0 1 0 0 0 0 0 0 0 0 0 0 0 0 1 0 0 0
0 0 0 1 0 0 0 0 0 0 0 0 0 0 1 0 0 0 0
0 0 0 1 1 0 0 0 0 0 0 0 0 1 1 0 0 0 0
0 0 0 0 1 1 0 0 0 0 0 0 1 1 0 0 0 0 0
0 0 0 0 0 0 1 1 1 0 1 1 1 0 0 0 0 0 0
0 0 0 0 0 0 0 0 0 1 0 0 0 0 0 0 0 0 0
0 0 0 0 0 0 0 0 0 0 0 0 0 0 0 0 0 0 0
```

*F I G.  6 C*

$F^2$

```
0 0 0 0 0 0 0 0 0 0 0 0 0 0 0 0 0 0 0
0 0 0 0 0 0 0 0 0 0 0 0 0 0 0 0 0 0 0
0 0 0 0 0 0 0 0 1 0 0 0 0 0 0 0 0 0 0
0 0 0 0 0 0 1 1 1 0 1 1 1 0 0 0 0 0 0
0 0 0 0 0 1 0 0 0 0 0 0 1 0 0 0 0 0 0
0 0 0 0 1 0 0 0 0 0 0 0 1 0 0 0 0 0 0
0 0 0 1 0 0 0 0 0 0 0 0 0 1 0 0 0 0 0
0 0 0 1 0 0 0 0 0 0 0 0 0 1 0 0 0 0 0
0 0 0 1 0 0 0 0 0 0 0 0 0 1 0 0 0 0 0
0 0 1 0 0 0 0 0 0 0 0 0 0 0 1 0 0 0 0
0 0 0 1 0 0 0 0 0 0 0 0 0 1 0 0 0 0 0
0 0 0 1 0 0 0 0 0 0 0 0 0 1 0 0 0 0 0
0 0 0 1 0 0 0 0 0 0 0 0 0 1 0 0 0 0 0
0 0 0 0 1 0 0 0 0 0 0 0 1 0 0 0 0 0 0
0 0 0 0 0 1 0 0 0 0 0 0 1 0 0 0 0 0 0
0 0 0 0 0 0 1 1 1 0 1 1 1 0 0 0 0 0 0
0 0 0 0 0 0 0 0 1 0 0 0 0 0 0 0 0 0 0
0 0 0 0 0 0 0 0 0 0 0 0 0 0 0 0 0 0 0
0 0 0 0 0 0 0 0 0 0 0 0 0 0 0 0 0 0 0
```

FIG. 7A

$F^3$

```
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 1 0 0 0 0 0 0 0 0 0 0 0
0 0 0 0 0 0 1 1 1 0 1 1 1 0 0 0 0 0 0 0
0 0 0 0 0 1 0 0 0 0 0 0 0 1 0 0 0 0 0 0
0 0 0 0 1 0 0 0 0 0 0 0 0 0 1 0 0 0 0 0
0 0 0 0 1 0 0 0 0 0 0 0 0 0 1 0 0 0 0 0
0 0 0 0 1 0 0 0 0 0 0 0 0 0 1 0 0 0 0 0
0 0 0 1 0 0 0 0 0 0 0 0 0 0 0 1 0 0 0 0
0 0 0 0 1 0 0 0 0 0 0 0 0 0 1 0 0 0 0 0
0 0 0 0 1 0 0 0 0 0 0 0 0 0 1 0 0 0 0 0
0 0 0 0 1 0 0 0 0 0 0 0 0 0 1 0 0 0 0 0
0 0 0 0 0 1 0 0 0 0 0 0 0 1 0 0 0 0 0 0
0 0 0 0 0 0 1 1 1 0 1 1 1 0 0 0 0 0 0 0
0 0 0 0 0 0 0 0 1 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
```

FIG. 7B

$F^4$

```
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 1 0 0 0 0 0 0 0 0 0 0 0
0 0 0 0 0 0 1 1 1 0 1 1 1 0 0 0 0 0 0 0
0 0 0 0 0 1 1 0 0 0 0 0 1 1 0 0 0 0 0 0
0 0 0 0 0 1 0 0 0 0 0 0 0 1 0 0 0 0 0 0
0 0 0 0 0 1 0 0 0 0 0 0 0 1 0 0 0 0 0 0
0 0 0 0 1 0 0 0 0 0 0 0 0 0 1 0 0 0 0 0
0 0 0 0 0 1 0 0 0 0 0 0 0 1 0 0 0 0 0 0
0 0 0 0 0 1 0 0 0 0 0 0 0 1 0 0 0 0 0 0
0 0 0 0 0 1 1 0 0 0 0 0 1 1 0 0 0 0 0 0
0 0 0 0 0 0 1 1 1 0 1 1 1 0 0 0 0 0 0 0
0 0 0 0 0 0 0 0 1 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
```

FIG. 7C

$F^5$

```
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 1 0 0 0 0 0 0 0 0 0 0 0
0 0 0 0 0 0 0 1 1 0 1 1 0 0 0 0 0 0 0 0
0 0 0 0 0 0 1 0 0 0 0 1 0 0 0 0 0 0 0 0
0 0 0 0 0 0 1 0 0 0 0 1 0 0 0 0 0 0 0 0
0 0 0 0 0 1 0 0 0 0 0 0 1 0 0 0 0 0 0 0
0 0 0 0 0 0 1 0 0 0 0 1 0 0 0 0 0 0 0 0
0 0 0 0 0 0 1 0 0 0 0 1 0 0 0 0 0 0 0 0
0 0 0 0 0 0 0 1 1 0 1 1 0 0 0 0 0 0 0 0
0 0 0 0 0 0 0 0 1 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
```

F I G.  8 A

$F^6$

```
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 1 0 0 0 0 0 0 0 0 0 0 0
0 0 0 0 0 0 1 1 0 1 1 0 0 0 0 0 0 0 0 0
0 0 0 0 0 0 1 0 0 0 1 0 0 0 0 0 0 0 0 0
0 0 0 0 0 1 0 0 0 0 0 1 0 0 0 0 0 0 0 0
0 0 0 0 0 0 1 0 0 0 1 0 0 0 0 0 0 0 0 0
0 0 0 0 0 0 1 1 0 1 1 0 0 0 0 0 0 0 0 0
0 0 0 0 0 0 0 0 1 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
```

F I G.  8 B

$F^7$

```
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 1 0 0 0 0 0 0 0 0 0 0 0
0 0 0 0 0 0 0 1 0 1 0 0 0 0 0 0 0 0 0 0
0 0 0 0 0 0 0 1 0 0 0 1 0 0 0 0 0 0 0 0
0 0 0 0 0 0 0 0 1 0 1 0 0 0 0 0 0 0 0 0
0 0 0 0 0 0 0 0 1 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
```

F I G.  8 C

$F^8$

```
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 1 0 0 0 0 0 0 0 0 0 0 0
0 0 0 0 0 0 0 1 0 1 0 0 0 0 0 0 0 0 0 0
0 0 0 0 0 0 0 0 1 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
0 0 0 0 0 0 0 0 0 0 0 0 0 0 0 0 0 0 0 0
```

*F I G. 9 A*

*F I G. 9 B*

$$\begin{pmatrix} 1 & 0 & -1 \\ 2 & 0 & -2 \\ 1 & 0 & -1 \end{pmatrix}$$

Transversal edge

$$\begin{pmatrix} 1 & 2 & 1 \\ 0 & 0 & 0 \\ -1 & -2 & -1 \end{pmatrix}$$

Longitudinal edge

## INTERNATIONAL SEARCH REPORT

International application No.

PCT/JP2004/015264

| A. CLASSIFICATION OF SUBJECT MATTER |
|---|
| Int.Cl$^7$ G06T7/00 |

According to International Patent Classification (IPC) or to both national classification and IPC

| B. FIELDS SEARCHED |
|---|
| Minimum documentation searched (classification system followed by classification symbols)<br>Int.Cl$^7$ G06T7/00 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2003 |
| Kokai Jitsuyo Shinan Koho | 1971–2003 | Toroku Jitsuyo Shinan Koho | 1994–2003 |

Electronic data base consulted during the international search (name of data base and, where practicable, search terms used)
JOIS(JICST FILE) ENSHUFIRUTA, ZernikeMOMENTO (in Japanese)

## C. DOCUMENTS CONSIDERED TO BE RELEVANT

| Category* | Citation of document, with indication, where appropriate, of the relevant passages | Relevant to claim No. |
|---|---|---|
| Y | JP 2002-157596 A (Sony Corp.),<br>31 May, 2002 (31.05.02),<br>Full text; Figs. 1 to 12<br>& WO 2002/41254 A1 & US 2003/059092 A1 | 1-10 |
| Y | JP 2002-342760 A (Sharp Corp.),<br>29 November, 2002 (29.11.02),<br>Full text; Figs. 1 to 13<br>(Family: none) | 1-10 |
| Y | Atsushi ONO, Zernike Moment o Mochiita Kao Gazo Ninshiki", The Transactions of the Institute of Electronics, Information and Communication Engineers, 01 July, 2002 (01.07.02), Vol.J85-D-II, No.7, pages 1149 to 1156 | 1-10 |

☐ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>26 November, 2004 (26.11.04) | Date of mailing of the international search report<br>14 December, 2004 (14.12.04) |
|---|---|
| Name and mailing address of the ISA/<br>Japanese Patent Office | Authorized officer |
| Facsimile No. | Telephone No. |

Form PCT/ISA/210 (second sheet) (January 2004)